# EUROPÄISCHE PATENTSCHRIFT

(11) **EP 2 017 494 B1**
(45) Veröffentlichungstag und Bekanntmachung des Hinweises auf die Patenterteilung: **25.07.2018**
(21) Anmeldenummer: 08104657.5
(22) Anmeldetag: 07.07.2008
(51) Int. Cl.: F16F 9/46, F16F 9/52

(54) **Stoßdämpfer und Verfahren zum Einstellen eines Stoßdämpfers**
Shock absorber and method for calibrating same
Amortisseur et procédé de réglage d'un amortisseur

(30) Priorität: 16.07.2007 DE 102007033327
(43) Veröffentlichungstag der Anmeldung: 21.01.2009
(73) Patentinhaber: Weforma Dämpfungstechnik GmbH, 52224 Stolberg (DE)
(72) Erfinder: Schmidt, Armin, 52224 Stolberg (DE)
(74) Vertreter: Bauer, Dirk

(56) Entgegenhaltungen:
- EP-A2- 1 293 702
- DE-A1- 4 417 796
- JP-A- S59 187 127
- US-A- 3 918 693
- US-A- 4 133 415

## Beschreibung

Die Erfindung betrifft einen Stoßdämpfer gemäß dem Oberbegriff des Anspruchs 1.

Derartige Stoßdämpfer, die häufig auch als Industriestoßdämpfer bezeichnet werden, sind beispielsweise aus der US 4 133 415 A bekannt. Im Hintergrund der Erfindung ist ein weiterer Stoßdämpfer aus DE 10 2005 013 734 A1 bekannt. Die Veränderung der Dämpfungskonstante, d.h. der Drosselwirkung des Stoßdämpfers erfolgt z.B. dadurch, dass das Druckrohr relativ zu dem Gehäuserohr verdreht wird. Dabei können entweder bestimmte Drosselbohrungen in dem Druckrohr verschlossen und andere mit abweichendem Querschnitt freigegeben werden oder aber gewisse Drosselbohrungen werden in Bezug auf ihren Drosselquerschnitt verändert, in dem z.B. die Überdeckung der Drosselbohrungen durch wendelförmige Stege im Gehäuserohr variiert werden. Die Einstellung erfolgt dabei manuell, beispielsweise mit Hilfe eines stirnseitig aus dem Gehäuserohr heraustretenden Rändelrades oder mit Hilfe einer des Gehäuserohr durchdringenden Stellschraube, die mittels eines Schraubendrehers betätigt wird. In einer "Kennlinie" eines Stoßdämpfers wird die einer Verschiebung des Kolbens entgegen gesetzte Dämpfungskraft über der Geschwindigkeit der Verschiebung dargestellt.

Die bekannten Industriestoßdämpfer werden z.B. bei innerbetrieblichen Transportbahnen, die als sogenannte Rollenbahnen ausgeführt sind, als Stoppeinrichtungen für Transportbehälter verwendet. Bei den Transportbehältern handelt es sich z.B. um Transportpaletten zur Aufnahme eines zu bearbeitenden Werkstücks, das auf einer Palette von einer Bearbeitungsstation zur nächsten transportiert wird. Ein typischer Fall ist z.B. die Herstellung bzw. Bearbeitung von gusstechnisch hergestellten und spanend nachzubearbeitenden Motorblöcken, Zylinderköpfen oder Getriebegehäusen. Soll ein auf einer Palette befindliches Werkstück, das von einer Bearbeitungsstation kommt, beispielsweise an einer anderen Bearbeitungsstation angehalten werden, so läuft die Transportpalette gegen ein mit der Kolbenstange des Industriestoßdämpfers gekoppeltes Anschlagelement. Mit dem Anschlagelement wird der Kolben in dem Druckrohr in Förderrichtung gegen die Dämpferkraft soweit verschoben, bis die Bewegungsenergie des Förderguts "verbraucht" ist. Die Bewegungsenergie des Werkstücks einschließlich der Transportpalette wird beim Abbremsvorgang in Stoßdämpfer in Folge der Bewegung des Kolbens, d.h. der Verdrängung des Arbeitsfluids durch die Drosselquerschnitte, in Wärmeenergie umgewandelt.

Der Speicherraum der bekannten Stoßdämpfer ist häufig mit einem flexiblen, geschlossenporigen Schaumstoff ausgefüllt, der durch das eindringende Fluid verdrängt und komprimiert wird. Bei Entlastung des Anschlagelements - insbesondere durch Entfernen des Förderguts von der Stoppstelle - ermöglicht der Schaumstoff eine Kompensation des beim Einfahren der Kolbenstange zusätzlich benötigten Volumens, wobei die Rückstellung durch eine Schraubenfeder erfolgt, die das Fluid wieder zurück in den Arbeitsraum und damit das Anschlagelement zurück in seine ursprüngliche Stellung befördert. Alternativ ist es auch bekannt, den Speicherraum im Wesentlichen gegenüber dem Arbeitsraum auf der anderen Seite des Kolben als zweiten Arbeitsraum auszubilden und die Rückstellung durch aktive Druckbeaufschlagung dieses zweiten Arbeitsraums zu bewirken.

Die im Betrieb der bekannten Stoßdämpfer entstehende Wärme führt vorübergehend auch zu einer Erwärmung des Fluids (Öl oder Gas), wobei sich die Betriebstemperatur nach einer von der Masse des Fluids und dem Wärmeübergang an die Umgebung abhängigen zeitlichen Verlauf asymptotisch wieder der Umgebungstemperatur annähert. Gegenüber dem Zustand bei Umgebungstemperatur, in dem die Dämpferrate - das Verhältnis von Dämpfungskraft und Geschwindigkeit - im Allgemeinen eingestellt wird, weist das Fluid in der Zwischenzeit eine niedrigere Viskosität auf. Mit der Viskosität ist auch der Widerstand gegen die Durchströmung der Drossel und damit die Dämpferrate gegenüber dem eingestellten Wert vermindert.

Die temperaturabhängige Schwankung der Dämpferrate bedingt insbesondere bei kurzfristig aufeinander folgenden - auch identischen - Werkstücken eine Schwankung in der mit den bekannten Stoßdämpfern erzielten Stoppstellen auf der Förderbahn, die bei der Auslegung entsprechend berücksichtigt werden muss. Die Verminderung der Dämpferrate im Betrieb muss zudem bei Auslegung und Einstellung durch Sicherheitszuschläge ausgeglichen werden, um Beschädigungen der bekannten Stoßdämpfer, der geförderten Werkstücke und der Fördereinrichtungen zu vermeiden.

Häufig ist es bei derartigen rollenbasierten Transportsystemen der Fall, dass Werkstücke mit unterschiedlicher Masse befördert, d.h. auch angehalten werden müssen. Die vom Stoßdämpfer aufzunehmende Bewegungsenergie differiert somit ebenfalls. Der Stoßdämpfer bzw. dessen Drosselcharakteristik wird nun in der Regel einmalig derart eingestellt, dass beim Werkstück mit der größten Masse, das Erreichen der Totpunktposition des Kolbens sicher verhindert wird, d.h. so eingestellt, dass die gesamte Bewegungsenergie von Palette und Werkstück vom Stoßdämpfer in Wärme umgewandelt werden. Problematisch ist bei einer derartigen Einstellung, dass Werkstücke mit deutlich kleinerer Masse als die Maximalmasse aufgrund der geringeren Bewegungsenergie (es wird eine Bewegung mit gleicher Geschwindigkeit bei sämtlichen Werkstücken angenommen) früher zum Stillstand gelangen. Hierbei können Fehlfunktionen in derartigen Transportsystemen auftreten, weil insbesondere leichtere Werkstücke aufgrund ihres sehr kurzen Verzögerungswegs nicht eine bestimmte vorgeschriebene Stillstandsposition erreichen, um hiermit weitere Handhabungs- bzw. Bearbeitungsschritte auszulösen.

### Aufgabe

Der Erfindung liegt daher die Aufgabe zugrunde, einen Stoßdämpfer mit einem Gehäuserohr, einem Druckrohr und einem Kolben so weiter zu entwickeln, dass Werkstücke mit unterschiedlicher Masse innerhalb einer bestimmten Wegstrecke, die höchstens dem maximalen Hub des Kolbens entsprechen darf, zum Stillstand gebracht werden, wobei gleichzeitig aber auch bei leichten Werkstücken das Erreichen einer minimalen Verzögerungsstrecke sichergestellt sein soll.

### Lösung

Ausgehend von einem Stoßdämpfer der eingangs beschriebenen Art wird diese Aufgabe durch das Kennzeichen der Erfindung gemäß Anspruch 1 gelöst.

Die fernsteuerbare Antriebseinrichtung erlaubt auf sehr einfache Weise die Anpassung der Dämpfungscharakteristik an unterschiedliche Dämpfungsaufgaben, d.h. z.B. das Abstoppen von Werkstücken mit unterschiedlich großer Masse. Da der wirksame Drosselquerschnitt erfindungsgemäß mit Hilfe einer ferngesteuerten Antriebseinrichtung sehr einfach und rasch verändert werden kann, kann bedarfsweise vor jedem einzelnen Stoppvorgang die Dämpfungskonstante an die durch die Werkstückmasse vorgegebene Dämpfungsaufgabe angepasst werden. So kann z.B. die Dämpfungskonstante vor jedem Abbremsvorgang immer so eingestellt werden, dass das Werkstück mit einer gewissen Sicherheit vor dem Endanschlag, d.h. vor Nutzung des maximalen Hubs, zum Stillstand gelangt. Probleme mit Paletten, die mit leichten Werkstücken versehen sind, ergeben sich somit durch den erfindungsgemäßen Stoßdämpfer nicht mehr, weil ein zu frühes Abstoppen, d.h. ein mangelndes Erreichen einer erforderlichen Stillstandsposition, nicht mehr vorkommt. Typisch wird sein, dass die Dämpfungskonstante des Stoßdämpfers nicht vor jedem Dämpfungsvorgang verändert wird, sondern dass beispielsweise eine gewisse Zeit lang aufgrund gleicher Werkstücke mit einem ersten wirksamen Drosselquerschnitt gearbeitet wird und dass sodann auf Werkstücke mit einer anderen Masse gewechselt wird, so dass dann der wirksame Drosselquerschnitt entsprechend angepasst wird. Aber auch wenn eine Veränderung der Dämpfungskonstante nur in größeren Zeitabständen erfolgt, ist der erfindungsgemäße Stoßdämpfer besonders wirtschaftlich, da auf ein manuelles Einstellen verzichtet werden kann, wodurch Personal und Zeit eingespart werden und Fehlbedienungen vermieden werden können.

Die Fernsteuerung der Einstellung wird insbesondere mittels elektrischer Energie erfolgen, d.h. bei dem ferngesteuerten Aktor handelt es sich typischerweise um einen Elektromotor oder eine andere Spulen-Anker-Einrichtung. Grundsätzlich kommen aber auch pneumatische oder hydraulische Antriebe oder sogar mechanisch wirkende Antriebe, wie beispielsweise Seilzüge oder Gestänge in Frage.

Eine besonders einfache Art eine kompakte Einheit aus Stoßdämpfer und Antriebseinrichtung zu bilden besteht darin, dass letztere an dem Gehäuserohr, insbesondere dessen Stirnseite befestigt ist. Die Konstruktion wird dabei besonders einfach, wenn die Längsachse des Stoßdämpfers oder des Gehäuserohrs mit der Mittelachse der Antriebseinrichtung, insbesondere eines Elektromotors fluchtet. Um die Konstruktion des erfindungsgemäßen Stoßdämpfers weiter zu vereinfachen, sollte die Antriebseinrichtung auf der der Kolbenstange gegenüberliegenden Seite des Gehäuserohres angeordnet sein. Grundsätzlich ist jedoch auch eine Anordnung auf der gegenüberliegenden Seite, an der die Kolbenstange aus dem Gehäuserohr austritt, möglich. In diesem Fall kann ein hülsenförmiges Übertragungselement der Antriebseinrichtung die Stirnseite des Gehäuserohres abgedichtet durchdringen, um beispielsweise eine Verdrehung des Druckrohres zu bewirken.

Eine auf bekannte Stoßdämpfer besonders einfach anzuwendende Ausführungsform der Erfindung besteht darin, dass mittels der Antriebseinrichtung das Druckrohr relativ zu dem Gehäuserohr verdrehbar und/oder verschiebbar ist. Das Druckrohr ist erfindungsgemäß in einer mit einem in axiale Richtung des Druckrohres verlaufenden Schlitz versehen und koaxial zu dem Druckrohr angeordneten Überwurfhülse gelagert, die koaxial im Gehäuserohr angeordnet ist, wobei der Schlitz ein Überströmkanal bildet, der ein Überströmen von Fluid an dem Kolben vorbei aus dem ersten Arbeitsraum in den zweiten Arbeitsraum oder den Speicherraum erlaubt. Um unterschiedliche Drosselquerschnitte zu realisieren, sind das Druckrohr und die Überwurfhülse mittels der Antriebseinrichtung relativ zueinander verdrehbar.

In dem Druckrohr befindet sich erfindungsgemäß eine Mehrzahl von in axiale Richtung verlaufenden Reihen mit Drosselbohrungen, wobei die Reihen in Umfangsrichtung auf der Mantelfläche des Druckrohrs verteilt angeordnet sind und mittels der Antriebseinrichtung jeweils eine Reihe in Überdeckung mit dem Schlitz in der Überwurfhülse gebracht werden kann.

Um die Konstruktion des erfindungsgemäßen Stoßdämpfers zu vereinfachen, sollte die Antriebseinrichtung auf der der Kolbenstange gegenüberliegenden Seite des Gehäuserohres angeordnet sein. Grundsätzlich ist jedoch auch eine Anordnung auf der gegenüberliegenden Seite, an der die Kolbenstange aus dem Gehäuserohr austritt, möglich. In diesem Fall kann ein hülsenförmiges Übertragungselement der Antriebseinrichtung die Stirnseite des Gehäuserohres abgedichtet durchdringen, um beispielsweise eine Verdrehung des Druckrohres zu bewirken.

Eine vorteilhafte Ausgestaltung der Erfindung sieht vor, den Stoßdämpfer mit mindestens einer Messeinrichtung auszustatten, mittels derer eine Betriebstemperatur des Fluids und/oder ein Druck des Fluids in dem Arbeitsraum messbar und mit mindestens einer Steuereinrichtung, mittels derer die Antriebseinrichtung abhängig von der Betriebstemperatur und/oder dem Druck in dem Arbeitsraum steuerbar ist, zu versehen. Der erfindungsgemäße Stoßdämpfer ermöglicht über die Steuerung des wirksamen Drosselquerschnitts einen Ausgleich der temperaturbedingten Änderung der Viskosität des Fluids und vermeidet so wirksam Schwankungen der Kennlinie des Stoßdämpfers. Wird der Druck des Fluids in dem Arbeitsraum gemessen, so ist jeweils der gemessene Maximaldruck ausschlaggebend für die Steuerung der Antriebseinrichtung.

Die Antriebseinrichtung eines erfindungsgemäßen Stoßdämpfers erlaubt eine an die Bauart des Stoßdämpfers - und dessen spezifische Verstellmöglichkeiten - angepasste motorische Verdrehung und lineare Verschiebung des entsprechenden Bauelements des Stoßdämpfers. Beispielsweise kann mittels der Antriebseinrichtung ein - aus dem Stand der Technik bekanntes - rotierbares Druckrohr verdreht oder eine konische Düsennadel in der Drossel linear verschoben werden. Die Steuereinrichtung eines erfindungsgemäßen Stoßdämpfers weist einen Eingang für die Betriebstemperatur aus der Messeinrichtung und einen Ausgang für die Stellgröße der Antriebseinrichtung auf.

Bevorzugt weist die Messeinrichtung eines erfindungsgemäßen Stoßdämpfers mindestens ein Thermoelement und/oder einen piezo-elektrischen Drucksensor auf. Thermoelemente stehen in einer Vielzahl von Ausführungen preisgünstig als Massenartikel zur Verfügung. Das Thermoelement wird in einer Bohrung im Gehäuse in der Nähe des Fluids (oder unmittelbar in das Fluid) angebracht und erlaubt über die elektrische "Thermospannung" zwischen seinen Anschlüssen Rückschlüsse über die Temperatur des Fluids. Alternativ kann auch ein Bimetall, beispielsweise in Form einer Spiralfeder als Messeinrichtung mit einer mechanischen Ausgangsgröße zum Einsatz kommen.

Die Steuereinrichtung eines erfindungsgemäßen Stoßdämpfers ist in einer vorteilhaften Ausführungsform eines erfindungsgemäßen Stoßdämpfers programmgesteuert. Insbesondere weist eine solche Steuereinrichtung mindestens einen integrierten Schaltkreis auf und enthält (beispielsweise in einem separaten Speicherbereich) eine Zuordnungsvorschrift von gemessenen Werten der Betriebstemperatur zu der Stellgröße der Antriebseinrichtung.

An einem erfindungsgemäßen Stoßdämpfer sind besonders bevorzugt die Steuereinrichtung und die Antriebseinrichtung in einer baulichen Einheit integriert. Die erforderlichen externen Anschlüsse des erfindungsgemäßen Stoßdämpfers sind so auf ein Minimum - Anschlüsse für die mechanische Befestigung und gegebenen Falls für die Energieversorgung - reduziert. Bei Verwendung von Thermoelementen einerseits und einem elektrischen Antrieb andererseits kann die Steuereinrichtung alternativ auch entfernt von dem Stoßdämpfer in einem separaten Schaltschrank oder auch in einer zentralen Steuerung implementiert werden.

Weiterhin ist in einer vorteilhaften Ausführungsform eines erfindungsgemäßen Stoßdämpfers die Antriebseinrichtung in einem Gehäuse des Stoßdämpfers integriert. So ist nicht nur die Handhabung des erfindungsgemäßen Stoßdämpfers erleichtert und weniger fehleranfällig. Zugleich werden auch potenziell störende Umgebungseinflüsse auf die Verbindung zwischen Stoßdämpfer und Antriebseinrichtung wirksam vermieden.

Erfindungsgemäß kann an einem erfindungsgemäßen Stoßdämpfer eine Betriebstemperatur des Fluids und/oder ein Druck des Fluids in dem Arbeitsraum gemessen und der Drosselquerschnitt abhängig von der Betriebstemperatur und/oder dem Druck in dem Arbeitsraum ermittelt und eingestellt werden, wobei eine Änderung der Betriebstemperatur und/oder eine Änderung des während eines Dämpfungszyklus auftretenden Maximaldrucks gemessen und der Drosselquerschnitt abhängig von der Änderung angepasst, und der Drosselquerschnitt automatisch eingestellt wird. Das erfindungsgemäße Verfahren ist insbesondere vorteilhaft anwendbar, wenn die Stellgröße nicht eine absolute Lage des Stellelements, sondern eine inkrementelle Lageänderung beschreibt, wie beispielsweise eine Verdrehung eines rotierbaren Druckrohres um einen Stellwinkel. Wenn außerdem in einer Steuereinrichtung die absolute Lage des Stellelements jeweils gespeichert wird, dann kann die Zuordnung eines gemessenen Werts der Änderung zu einer Stellgröße auch abhängig von diesem absoluten Wert formuliert werden. Die automatische Einstellung des Drosselquerschnitts ermöglicht einen automatischen Betrieb eines Stoßdämpfers auch unter stark schwankenden Temperaturen, beispielsweise unter schwankender Belastung einer Stoppstelle in einer Fördereinrichtung.

### Ausführungsbeispiel

Die Erfindung wird nachfolgend anhand eines Ausführungsbeispiels, das in den Zeichnungen dargestellt ist, näher erläutert.

Es zeigt:
- Fig. 1: einen Längsschnitt durch einen ersten Stoßdämpfer,
- Fig. 1a: einen Querschnitt durch den Stoßdämpfer gemäß Fig. 1,
- Fig. 1b - 1e: vier Ansichten des Druckrohres des Stoßdämpfers gemäß Fig. 1,
- Fig. 2: einen Längsschnitt durch eine erfindungsgemäße Ausführungsform eines Stoßdämpfers,
- Fig. 2a: einen Querschnitt durch den Stoßdämpfer gemäß Fig. 2,
- Fig. 2b - 2e: wie Fig. 1b bis le,
- Fig. 2f: einen Längsschnitt durch eine geschlitzte Überwurfhülse des Stoßdämpfers gemäß Fig. 2,
- Fig. 2g: einen Querschnitt durch eine geschlitzte Überwurfhülse des Stoßdämpfers gemäß Fig. 2,

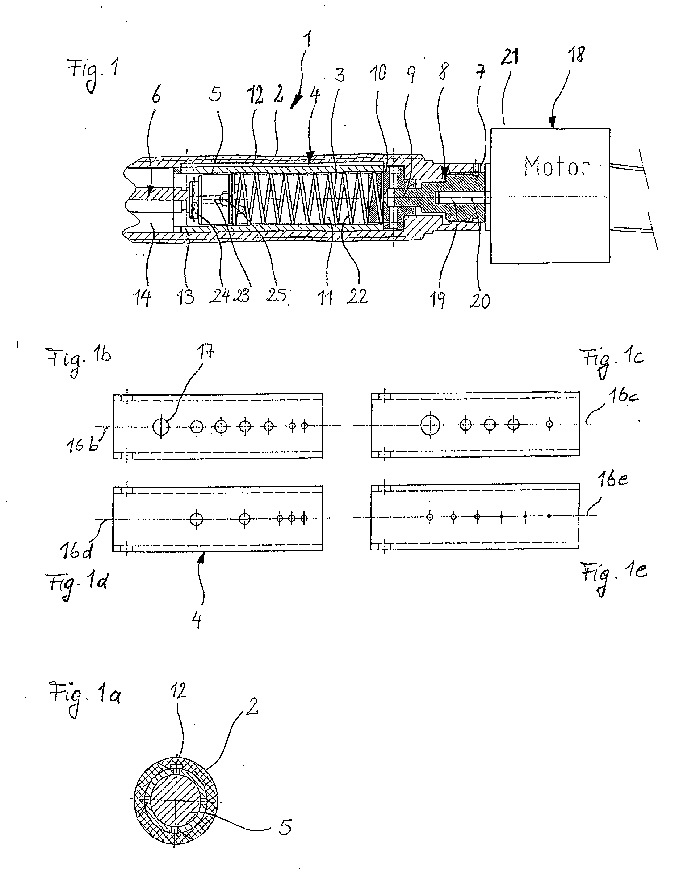

Ein in Fig. 1 dargestellter Stoßdämpfer 1 besteht aus einem äußeren zylinderförmigen Gehäuserohr 2 und einem darin koaxial und um die gemeinsame Mittelachse 3 drehbar gelagerten, gleichfalls zylinderförmigen Druckrohr 4, in dem ein Kolben 5 an seiner äußeren Mantelfläche radial abgedichtet in axiale Richtung in dem Druckrohr 4 verschiebbar gelagert ist. An den Kolben 5 ist einseitig eine Kolbenstange 6 angeschlossen, die durch eine in Fig. 1 nicht gezeigte linke Stirnseite des Gehäuserohres 2 fluiddicht abgedichtet hinausgeführt ist. In die rechte Stirnseite 7 des Gehäuserohres 2 ist ein Stopfen 8 eingesetzt, der den Innenraum des Stoßdämpfers 1 fluiddicht verschließt. Ein zapfenförmiges Vorderteil 9 des Stopfens 8 ist drehmomentfest mit einem weiteren Stopfen 10 gekoppelt, der den im Innern des Druckrohres 4 befindlichen ersten Arbeitsraum 11 verschließt.

Aus der Querschnittsdarstellung gemäß Fig. la ergibt sich, dass sich in dem Gehäuserohr 2 ein nutförmiger Überströmkanal 12, der in die innere Mantelfläche des Gehäuserohres 2 eingebracht ist, befindet. Der Überströmkanal 12 erstreckt sich nahezu über die gesamte Länge des Druckrohres 4, mindestens jedoch bis zu in dem Druckrohr befindlichen Bohrungen 13, die eine Verbindung zwischen dem Überströmkanal 12 und dem auf der Kolbenstangenseite befindlichen zweiten Arbeitsraum 14 bilden.

Wie in den Fig. 1b bis le gezeigt ist, befinden sich entlang von vier achsparallel auf der äußeren Mantelfläche 15 des Druckrohres 4 verlaufenden Linien 16b bis 16e im Abstand zueinander angeordnete Drosselöffnungen 17 in Form von Bohrungen mit verschiedenen Durchmessern. Die Bohrungen auf jeweils einer der Linien 16b bis 16e definieren in Kombination miteinander den wirksamen Drosselquerschnitt und bestimmen somit die Dämpfungscharakteristik des Stoßdämpfers 1.

Ausgehend von der in Fig. 1 dargestellten Stellung des Kolbens 5 wird bei dessen weiterem Einfahren in das Gehäuserohr 2, d.h. auch in das Druckrohr 4, das in dem Arbeitsraum 11 befindliche Fluid, insbesondere Hydrauliköl, durch die Drosselöffnungen 17, die gerade mit dem Überströmkanal 12 korrespondieren, in letzteren verdrängt und strömt von dort über die Bohrungen 13 in den Arbeitsraum 14 sowie einen nicht näher dargestellten Speicherraum, der in der Lage ist, das von der in den Stoßdämpfer 1 eindringende Volumen der einfahrenden Kolbenstange 6 zu kompensieren. Typischerweise ist der Speicherraum mit einem Schaumstoffmaterial gefüllt, das wie eine Art Gasfeder wirkt.

Solange der Kolben 5 noch nicht die bei der maßgeblichen Linie 16b bis 16e am weitesten links befindliche Drosselöffnung 17 erreicht hat, wirken sämtliche Drosselöffnungen 17 der jeweils aktiven Reihe gleichzeitig und definieren in der Summe den wirksamen Drosselquerschnitt. Dieser reduziert sich fortlaufend, je mehr Drosselöffnungen mit fortgesetztem Einfahren des Kolbens 5 in das Druckrohr 4 überdeckt bzw. überfahren werden und somit nicht mehr für ein Abströmen von Fluid aus dem sich verkleinernden Arbeitsraum 11 zur Verfügung stehen. Da die Drosselöffnungen 17 zudem nach rechts hin kleiner werden, sinkt der wirksame Drosselquerschnitt mit zunehmendem Eintauchen des Kolbens 5 in den Stoßdämpfer 1 fortlaufend. Die Dämpfungscharakteristik des Stoßdämpfers 1 ist somit gegen Ende des Dämpfungsvorgangs, d.h. noch vor dem Erreichen des Endanschlags, besonders "hart", um die möglicherweise noch vorhandene Restenergie zuverlässig abzubauen.

Durch geeignete Anordnung und Größenauswahl der Drosselöffnungen 17 innerhalb jeweils einer der durch die Linien 16b bis 16e definierten Reihen, kann die Wegabhängigkeit der Dämpfungscharakteristik eingestellt werden. Bei ein und derselben Reihe von Drosselöffnungen 17 bleibt die Charakteristik jedoch immer gleich. Um dennoch Beeinflussungsmöglichkeiten zu haben, d.h. z.B. von anfänglich recht weicher Dämpfungscharakteristik (Bohrungsreihen gemäß Fig. 1b und 1c) zu durchweg härterer Dämpfungscharakteristik gemäß Fig. le wechseln zu können, ist das Druckrohr 4 innerhalb des Gehäuserohres 2 drehbar gelagert. Als Antriebseinrichtung 18 dient ein stirnseitig neben dem Stoßdämpfer 1 bzw. dem Gehäuserohr 2 angeordneter Elektromotor. Eine Ausgangswelle 19 des Motors ist drehmomentfest in eine angepasste Bohrung 20 in dem Stopfen 8 eingesetzt. Im Falle kreisförmiger Querschnitte kann die Ausgangswelle 20 in der Bohrung 19 verklebt sein; alternativ ist es auch möglich, einen von der Kreisform abweichenden übereinstimmenden Querschnitt von Ausgangswelle 19 und Bohrung 20 zu wählen, um einen für die Drehmomentübertragung erforderlichen Formschluss zu erreichen. Nicht gezeigt ist in diesem Zusammenhang eine Drehmomentstütze zwischen einem Gehäuse 21 der Antriebseinrichtung 18 und dem Gehäuserohr 2 des Stoßdämpfers. Der Stopfen 8 ist abschnittsweise mit einem Außengewinde versehen, das mit einem Innengewinde in dem zugeordneten Abschnitt des Gehäuserohres 2 zusammenwirkt. Dies hat zur Folge, dass der Stopfen 8 während der Verstellung zwischen den vier alternativen Dämpfungsvarianten entsprechend der Linien, wie in den Fig. 1b bis le dargestellt, aufgrund der vollzogenen 360°-Drehung um das Steigungsmaß des Gewindes in axialer Richtung bewegt ist, was jedoch ohne weiteren Einfluss ist. Im Falle einer verklebten Ausgangswelle 19 des Elektromotors muss die Ausgangswelle 19 über ein hinreichendes axiales Spiel verfügen. Es versteht sich von selbst, dass die Antriebseinrichtung 18 über geeignete Mittel verfügt, um die exakte Positionierung der Linien 16b bis 16e entlang der Mittellinie des Überströmkanals 12 sicherzustellen. Eine Verschwenkung des Druckrohres 4 gegenüber dem Gehäuserohr 2 muss im vorliegenden Fall jeweils genau in 90°-Schritten erfolgen.

Ist ein Dämpfungsvorgang abgeschlossen und hat der Kolben 5 seine Endstellung erreicht, so wird er durch die Kraft einer Rückholfeder, die beim Einfahren des Kolbens 5 komprimiert wird, wieder in Richtung auf seine Anfangsstellung zurückbewegt. Dies setzt selbstverständlich voraus, dass beispielsweise eine auf einer Rollenbahn sich bewegende Transportpalette, die zum Abbremsen auf ein Anschlagelement der Kolbenstange aufgelaufen ist, entfernt wurde oder aber durch die Kraft der Rückstellfeder zurückbewegt werden kann. Beim Zurückschieben des Kolbens 5 muss das Hydrauliköl nicht den umgekehrten Weg durch den Überströmkanal 12 und die Drosselöffnungen 17 nehmen, sondern kann im Wesentlichen ohne Drosselwirkung durch eine in dem Kolben 5 befindliche Rücklaufbohrung 23 sowie eine senkrecht hierzu verlaufende Querbohrung 24 aus dem Arbeitsraum 14 in den Arbeitsraum 11 überströmen. Um beim Einfahren des Kolbens 5 einen Kurzschluss durch die Rücklaufbohrung 23 zu unterbinden, befindet sich in einem erweiterten Endabschnitt des Kolbens 5 eine Ventilkugel 25, die bei einem Druckgefälle zwischen Arbeitsraum 11 und Arbeitsraum 14 den die Rücklaufbohrung 23 dicht verschließt.

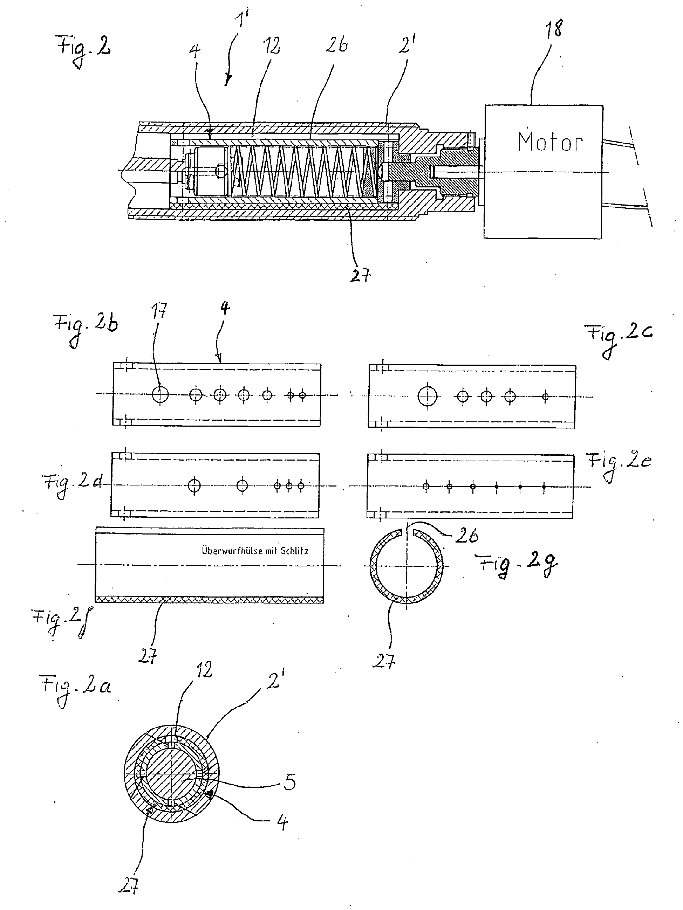

Der Unterschied zwischen der erfindungsgemäßen Ausführungsform eines Stoßdämpfers 1' gemäß Fig. 2 gegenüber dem in Fig. 1 gezeigten ersten Stoßdämpfer 1 besteht darin, dass der Überströmkanal 12 nicht als Nut in der inneren Mantelfläche des Gehäuserohres 2' angeordnet ist, sondern als Schlitz 26 (vgl. auch Fig. 2g) in einer Überwurfhülse 27, die sich zwischen dem Druckrohr 4 und dem Gehäuserohr 2' befindet (vgl. Fig. 2a). Die Überwurfhülse übernimmt dabei gegenüber den Drosselöffnungen 17 des Druckrohres 4 dieselbe Abdichtfunktion wie ansonsten die innere Mantelfläche des Gehäuserohres 2 bei der Ausführungsform gemäß Fig. 1. D.h. lediglich die Reihe von Drosselöffnungen 17, die gerade mit dem Schlitz 26 in der Überwurfhülse 27 korrespondiert, ist jeweils als Drosselöffnung wirksam. Die Überwurfhülse 27 ist in Bezug auf das Gehäuserohr 2' verdrehfest montiert, wohingegen das Druckrohr 4 - wiederum mittels der Antriebseinrichtung 18 - relativ zu dem Gehäuserohr 2' und der Überwurfhülse 27 verdrehbar ist, um zwischen den vier Varianten der Dämpfungscharakteristik entsprechend den Fig. 2b bis 2e wechseln zu können. Im Übrigen ist der Aufbau und die Funktionsweise des Stoßdämpfers 1' übereinstimmend mit dem Stoßdämpfer 1 gemäß Fig. 1.

### Bezugszeichenliste:

- 1,1': Stoßdämpfer
- 2,2': Gehäuserohr
- 3.: Mittelachse
- 4': Druckrohr
- 5.: Kolben
- 6.: Kolbenstange
- 7.: Stirnseite
- 8: Stopfen
- 9.: Vorderteil
- 10.: Stopfen
- 11.: Arbeitsraum
- 12: Überströmkanal
- 13.: Bohrung
- 14.: Arbeitsraum
- 16b - 16e: Linie
- 17.: Drosselöffnung
- 18.: Antrieb seinrichtung
- 19.: Ausgangswelle
- 20.: Bohrung
- 21.: Gehäuse
- 22.: Rückholfeder
- 23.: Rücklaufbohrung
- 24.: Querbohrung
- 25.: Ventilkugel
- 26.: Schlitz
- 27.: Überwurfhülse
nem Innengewinde in dem zugeordneten Abschnitt des Gehäuserohres 2 zusammenwirkt.

Dies hat zur Folge, dass der Stopfen 8 während der Verstellung zwischen den vier alternativen Dämpfungsvarianten entsprechend der Linien, wie in den Fig. 1b bis le dargestellt, aufgrund der vollzogenen 360°-Drehung um das Steigungsmaß des Gewindes in axialer Richtung bewegt ist, was jedoch ohne weiteren Einfluss ist. Im Falle einer verklebten Ausgangswelle 19 des Elektromotors muss die Ausgangswelle 19 über ein hinreichendes axiales Spiel verfügen. Es versteht sich von selbst, dass die Antriebseinrichtung 18 über geeignete Mittel verfügt, um die exakte Positionierung der Linien 16b bis 16e entlang der Mittellinie des Überströmkanals 12 sicherzustellen. Eine Verschwenkung des Druckrohres 4 gegenüber dem Gehäuserohr 2 muss im vorliegenden Fall jeweils genau in 90°-Schritten erfolgen.

Ist ein Dämpfungsvorgang abgeschlossen und hat der Kolben 5 seine Endstellung erreicht, so wird er durch die Kraft einer Rückholfeder, die beim Einfahren des Kolbens 5 komprimiert wird, wieder in Richtung auf seine Anfangsstellung zurückbewegt. Dies setzt selbstverständlich voraus, dass beispielsweise eine auf einer Rollenbahn sich bewegende Transportpalette, die zum Abbremsen auf ein Anschlagelement der Kolbenstange aufgelaufen ist, entfernt wurde oder aber durch die Kraft der Rückstellfeder zurückbewegt werden kann. Beim Zurückschieben des Kolbens 5 muss das Hydrauliköl nicht den umgekehrten Weg durch den Überströmkanal 12 und die Drosselöffnungen 17 nehmen, sondern kann im Wesentlichen ohne Drosselwirkung durch eine in dem Kolben 5 befindliche Rücklaufbohrung 23 sowie eine senkrecht hierzu verlaufende Querbohrung 24 aus dem Arbeitsraum 14 in den Arbeitsraum 11 überströmen. Um beim Einfahren des Kolbens 5 einen Kurzschluss durch die Rücklaufbohrung 23 zu unterbinden, befindet sich in einem erweiterten Endabschnitt des Kolbens 5 eine Ventilkugel 25, die bei einem Druckgefälle zwischen Arbeitsraum 11 und Arbeitsraum 14 den die Rücklaufbohrung 23 dicht verschließt.

Der Unterschied zwischen der alternativen Ausführungsform eines Stoßdämpfers 1' gemäß Fig. 2 gegenüber der in Fig. 1 gezeigten Ausführungsform besteht darin, dass der Überströmkanal 12 nicht als Nut in der inneren Mantelfläche des Gehäuserohres 2' angeordnet ist, sondern als Schlitz 26 (vgl. auch Fig. 2g) in einer Überwurfhülse 27, die sich zwischen dem Druckrohr 4 und dem Gehäuserohr 2' befindet (vgl. Fig. 2a). Die Überwurfhülse übernimmt dabei gegenüber den Drosselöffnungen 17 des Druckrohres 4 dieselbe Abdichtfunktion wie ansonsten die innere Mantelfläche des Gehäuserohres 2 bei der Ausführungsform gemäß Fig. 1. D.h. lediglich die Reihe von Drosselöffnungen 17, die gerade mit dem Schlitz 26 in der Überwurfhülse 27 korrespondiert, ist jeweils als Drosselöffnung wirksam. Die Überwurfhülse 27 ist in Bezug auf das Gehäuserohr 2' verdrehfest montiert, wohingegen das Druckrohr 4 - wiederum mittels der Antriebseinrichtung 18 - relativ zu dem Gehäuserohr 2' und dem Druckrohr 4 verdrehbar ist, um zwischen den vier Varianten der Dämpfungscharakteristik entsprechend den Fig. 2b bis 2e wechseln zu können. Im Übrigen ist der Aufbau und die Funktionsweise des Stoßdämpfers 1' übereinstimmend mit dem Stoßdämpfer 1 gemäß Fig. 1.

Der Stoßdämpfer 1" gemäß Fig. 3 besitzt ein Druckrohr 4", das über keine in der Mantelfläche befindlichen Drosselöffnungen verfügt, vielmehr ist das Druckrohr 4" im Bereich des Arbeitsraums 11 geschlossen ausgeführt. Der stirnseitige Abschluss auf der dem Kolben 5 gegenüberliegenden Seite des Druckrohres 4" wird von einer Drosselblende 28 gebildet, die eine zentrische Bohrung 29 besitzt. Der in das Gehäuserohr 2" eingeschraubte Stopfen 8", besitzt eine Drosselspitze 30 in Form eines Kegelstumpfs, der in der Bohrung 29 angeordnet ist. Im Bereich der kegelstumpfförmigen Drosselspitze 30 gehen von der Bohrung 29 zwei radial verlaufende Querbohrungen 31 ab, die jeweils in einen Überströmkanal 12" münden, der als flache Nut in der inneren Mantelfläche 32 des Gehäuserohres 2" ausgebildet ist. Das Überströmen des Hydrauliköls aus dem Arbeitsraum 11 in den Arbeitsraum 14 erfolgt durch den von der Drosselspitze 30 freigelassenen Restquerschnitt der Bohrung 29 und sodann über die Querbohrungen 31 und die Überströmkanäle 12" in den gegenüberliegenden Arbeitsraum 14.

Die Einstellung der Dämpfungscharakteristik, die keine Wegabhängigkeit besitzt, erfolgt durch mehr oder weniger weites Vordringen der Drosselspitze 30 in die Bohrung 29, da der wirksame Drosselquerschnitt zwischen der Bohrung 29 und den Querbohrungen 31 hierdurch verändert wird. Die axiale Verlagerung der Drosselspitze 30 erfolgt durch eine Drehbewegung des Stopfens 8", der mit seinem Außengewinde in einem angepassten Innengewinde in dem Gehäuserohr 2" gelagert ist. Die Ausgangswelle 19 der als Elektromotor ausgeführten Antriebseinrichtung 18 ist drehmomentfest mit dem Stopfen 8" gekoppelt. Eine Drehmomentenstütze zwischen Motor und Gehäuserohr 2" ist wiederum nicht dargestellt.

Die Ausführungsform des Stoßdämpfers 1'" gemäß den Fig. 4 und 4a unterscheidet sich nur insofern von der Variante gemäß den Fig. 3 und 3a, als die Drosselspitze 30 dort von einer Ventilkugel 33 gebildet wird, die dem mit einer radial verlaufenden Stirnfläche 34 endenden Stopfen 8'" vorgelagert ist. Die Ventilkugel 33 ist nicht mit dem Stopfen 8'" verbunden, sondern wird durch die Kegelform des dem Kolben 5 zugewandten vorderen Abschnitts 35 der Bohrung 29 an einem Herauswandern gehindert. Die als Anschlagfläche wirkende Stirnfläche 34 des Stopfens 8'" bestimmt je nach ihrer axialen Position die Stellung der Ventilkugel 33, in die sich diese bei Einwirkung des unter Druck stehenden Hydrauliköls in dem Arbeitsraum 11 maximal nach rechts bewegen kann. Hierdurch wird ein mehr oder weniger großer Drosselquerschnitt 36 zwischen der Ventilkugel 33 und der Umlaufkante an der Drosselblende freigegeben.

Wiederum erfolgt eine Verdrehung des Stopfens 8'" mit Hilfe der Antriebsvorrichtung 18, da der Stopfen mit seinem Außengewinde in einem entsprechendem Innengewinde in dem Gehäuserohr 2" gelagert ist.

Der in den Figuren 5, 5a und 6 dargestellte erfindungsgemäße Stoßdämpfer 1"" besteht aus einem äußeren zylindrischen Gehäuserohr 2 und einem in diesem koaxial gelagerten und um die gemeinsame Mittelachse 3 drehbaren, gleichfalls zylindrischen Druckrohr 4. In dem Druckrohr 4 ist ein Kolben 5 an seiner äußeren Mantelfläche 6 radial abgedichtet und in der Axialrichtung 38 verschiebbar. Mit dem Kolben 5 ist eine Kolbenstange 6 verbunden, die durch eine (nur in Figur 6 dargestellte) linke Stirnseite des Gehäuses 2 fluiddicht abgedichtet hinausgeführt ist und in einem Anschlagelement 39 endet.

Gegenüber der Kolbenstange 6 begrenzt der Kolben 5 mit dem Druckrohr 4 und einer Drossel einen ersten Arbeitsraum 11, der mit einem nicht dargestellten Hydrauliköl ausgefüllt ist. An der rechten Stirnseite ist in das Gehäuse 2 in der Axialrichtung 38 eine Stopfen 8 eingeschraubt, der zum Einen den ersten Arbeitsraum 11 fluiddicht verschließt. Die Drossel besteht aus einer in der Axialrichtung 38 in dem Gehäuse 2 abgestützten weiteren Stopfen 10 mit zwei radial verlaufenden Querbohrungen 31 und ein auf dem Stopfen 8 angebrachte, kegelstumpfförmige Vorderteil 9. Durch Verdrehen des Stopfens 8 um die Mittelachse 3 ist über die axiale Position des kegelstumpfförmigen Vorderteils 9 in dem weiteren Stopfen 10 der wirksame Öffnungsquerschnitt der Drossel für das aus dem ersten Arbeitsraum 11 in die Querbohrungen 31 strömende Hydrauliköl präzise einstellbar.

Zwischen dem Druckrohr 4 und dem Gehäuse 2 ist eine nicht dargestellte, gleichfalls zylindrische und in der Axialrichtung 38 geschlitzte Überwurfhülse angeordnet. Die Querbohrungen 31 des weiteren Stopfens 10 münden in einem Ringraum 39 zwischen dem weiteren Stopfen 10 und dem Gehäuse 2. Der Ringraum 40 ist über den als Überströmkanal wirkenden Schlitz 26 in der Überwurfhülse 27 mit einem zweiten Arbeitsraum 14 beziehungsweise Speicherraum zwischen der linken Stirnseite und dem Kolben 5. Zur Rückstellung des Kolbens 5 in die in Figur 5 dargestellte Bereitschaftsstellung ist der Kolben 5 über eine in dem ersten Arbeitsraum 11 angeordnete als Schraubenfeder ausgebildete Rückholfeder 22 an dem weiteren Stopfen 10 abgestützt. Zusätzlich ist der zweite Arbeitsraum 14 mit einem nicht dargestellten, komprimierbaren Schaumstoffmaterial gefüllt, um das Volumen des eintretenden Kolbens 5 kompensieren zu können.

Beim Rückstellen des Kolben 5 muss das Hydrauliköl nicht den umgekehrten Weg durch den Überströmkanal und die Drossel nehmen, sondern kann drucklos durch einen in dem Kolben 5 angebrachten Rücklaufbohrung 23 aus dem zweiten Arbeitsraum 14 in den ersten Arbeitsraum 11 überströmen. Ein Kurzschluss durch die Rücklaufbohrung 23 in Gegenrichtung ist mit einem als Ventilkugel 25 ausgebildeten Rückschlagventil unterbunden.

Der Stopfen 8 ist über eine Kupplung 41 axial verschieblich mit einer Ausgangswelle 19 eines als Antriebseinrichtung 18 eingesetzten Elektromotors verbunden und mittels dieses Elektromotors antreibbar. Der Elektromotor wird über ein Stromkabel 42 mit Energie versorgt und über eine Steuersignalleitung 43 angesteuert.

Das Gehäuserohr 2 des Stoßdämpfers 1"" weist an der rechten Stirnseite zwei einander gegenüber angeordnete, in der Axialrichtung 38 verlaufende Sackbohrungen 44 auf, die nahe dem Ringraum 40 enden. In diese Sackbohrungen 44 sind als Messeinrichtung zwei Thermoelemente 45 eingesetzt, deren Messsignal jeweils über ein Sensorkabel 46 weitergeleitet wird. (In Figur 5 ist vereinfachend nur eine der Sackbohrungen 44 und ein Thermoelement 45 mit Sensorkabel 46 dargestellt.)

Wie in Figur 6 dargestellt, sind das Stromkabel 42 und die Steuersignalleitung 43 der Antriebseinrichtung 18 sowie die Sensorkabel 46 der Messeinrichtung mit einer Steuereinrichtung 47 verbunden. Die Steuereinrichtung 47 ist ein handelsüblicher, programmierbarer Industriecomputer mit einem A/D-Wandler 48 für den Anschluss der Messeinrichtung und einer Anschlusskarte 49 für den Elektromotor.

In der Steuereinrichtung 47 ist die erforderliche Winkelposition dem Stopfen 8 in Abhängigkeit von der Betriebstemperatur des Fluids und von dem Impuls des auf das Anschlagelement 39 beispielsweise an einer Rollenförderstrecke auftreffenden Förderguts hinterlegt. An der Steuereinrichtung 47 ist mittels eines nicht dargestellten Bedienfeldes der Impuls einstellbar.

Zur Initialisierung des Stoßdämpfers 1"" fährt die Steuereinrichtung 47 den Stopfen 8 bis zum Anschlag in das Gehäuserohr 2 hinein. Aus dem eingestellten Impuls und der gemessenen Betriebstemperatur des Fluids bestimmt ein Steuerprogramm anhand der hinterlegten Abhängigkeit die erforderliche Winkelposition des Stopfens 8, steuert den Elektromotor entsprechend an und speichert die erreichte Winkelposition in einem Speicherbereich. Bei einer Änderung der Betriebstemperatur bestimmt das Steuerprogramm wiederum die erforderliche Winkelposition und steuert nach.

Die Steuereinrichtung 47 ist über einen nicht dargestellten Bus an ein gleichfalls nicht dargestelltes System zur Produktionssteuerung anschließbar. Über den Bus sind einerseits Impulsdaten an die Steuereinrichtung 47 und andererseits Statusmeldungen der Steuereinrichtung 47 an das übergeordnete System übermittelbar.

In einer nicht dargestellten, gekapselten Ausführung des erfindungsgemäßen Stoßdämpfers sind Stell- und Steuereinrichtung in das Gehäuse integriert. Der gekapselte Stoßdämpfer weist lediglich noch einen Anschluss für das Bussystem auf, über den der Stoßdämpfer auch mit elektrischer Energie versorgt wird.

Die Figuren 7 und 7a zeigen ein letztes Ausführungsbeispiel für einen erfindungsgemäßen Stoßdämpfer 1^{V}, der zwar analog zu dem Stoßdämpfer 1"" aus Figur 5 aufgebaut ist, dessen Messeinrichtung jedoch aus einem Drucksensor 50 in Form eines piezo-elektrischen Drucksensors besteht, der durch eine angepasste Bohrung in dem Gehäuse 2 des Stoßdämpfers 1^{V} geführt ist und in den Arbeitsraum 11 desselben hineinragt.

Anhand des Drucksensors 50 wird der Druckverlauf jeweils während eines Dämpfungsvorgangs über die Zeit gemessen, wobei jeweils der Maximaldruck der Druckkurve, der typischerweise einen Wert zwischen 400 bar und 500 bar betragen kann, als Wert für die Steuerung der Antriebseinrichtung 18 herangezogen wird. Übersteigt der Maximaldruck einen bestimmten wählbaren oberen Schwellenwert, so wird die Dämpfungskonstante durch Ansteuerung der Antriebseinrichtung 18 entsprechend reduziert. Bei Unterschreitung eines unteren Schwellenwerts des Drucks wird die Dämpfung vergrößert.

Figur 7a zeigt einen vergrößerten Ausschnitt aus Figur 7, in dem die Anordnung des Drucksensors 50 in dem Gehäuse 2 des Stoßdämpfers 1^{V} deutlich erkennbar ist.

Schließlich geht aus Figur 8 eine Prinzipskizze des Stoßdämpfers 1^{V} hervor, in der neben dem Stoßdämpfer 1^{V} ebenfalls die Antriebseinrichtung 18 und die Steuereinrichtung 47 gezeigt sind. Der erfindungsgemäße Stoßdämpfer 1^{V} verfügt sowohl über ein Thermoelement 45 als auch über einen Drucksensor 50, die beide jeweils über zwei Sensorkabel 46, 46' mit der Steuereinrichtung 47 verbunden sind.

### Bezugszeichenliste:

- 1,1',1",1"',1"", 1^{V}: Stoßdämpfer
- 2,2',2": Gehäuserohr
- 3.: Mittelachse
- 4,4": Druckrohr
- 5.: Kolben
- 6.: Kolbenstange
- 7.: Stirnseite
- 8,8",8"': Stopfen
- 9.: Vorderteil
- 10.: Stopfen
- 11.: Arbeitsraum
- 12,12": Überströmkanal
- 13.: Bohrung
- 14.: Arbeitsraum
- 15.: Mantelfläche
- 16.: Linie
- 17.: Drosselöffnung
- 18.: Antriebseinrichtung
- 19.: Ausgangswelle
- 20.: Bohrung
- 21.: Gehäuse
- 22.: Rückholfeder
- 23.: Rücklaufbohrung
- 24.: Querbohrung
- 25.: Ventilkugel
- 26.: Schlitz
- 27.: Überwurfhülse
- 28.: Drosselblende
- 29.: Bohrung
- 30.: Drosselspitze
- 31.: Querbohrung
- 32.: Mantelfläche
- 33.: Ventilkugel
- 34.: Stirnfläche
- 35.: Abschnitt
- 36.: Drosselquerschnitt
- 37.: Umlaufkante
- 38.: Axialrichtung
- 39.: Anschlagelement
- 40.: Ringraum
- 41.: Kupplung
- 42.: Stromkabel
- 43.: Steuersignalleitung
- 44.: Sackbohrung
- 45.: Thermoelement
- 46, 46': Sensorkabel
- 47.: Steuereinrichtung
- 48.: A/D-Wandler
- 49.: Anschlusskarte
- 50.: Drucksensor

## Patentansprüche

1. Stoßdämpfer (1') mit einem Gehäuserohr (2'), einem koaxial darin angeordneten Druckrohr (4) und einem Kolben (5), der radial abgedichtet in axiale Richtung in dem Druckrohr (4) verschiebbar ist, wobei eine Kolbenstange (6) des Kolbens (5) abgedichtet durch eine Stirnseite des Gehäuserohres (2') herausgeführt ist und der Kolben (5) zusammen mit zumindest dem Druckrohr (4) einen Arbeitsraum (11) begrenzt, aus dem ein Fluid in Folge einer Bewegung des Kolbens (5) in axiale Richtung durch mindestens eine einen Drosselquerschnitt definierende Drosselöffnung (17) unter Drosselwirkung in einen Speicherraum verdrängbar ist, wobei der wirksame Drosselquerschnitt mittels einer fernsteuerbaren Antriebseinrichtung (18) veränderbar ist, ***dadurch gekennzeichnet, dass*** das Druckrohr (4) in einer mit einem in der axialen Richtung verlaufenden Schlitz (26) versehenen und koaxial zu dem Druckrohr (4) angeordneten Überwurfhülse (27) gelagert ist, die koaxial in dem Gehäuserohr (2) angeordnet ist, wobei der Schlitz (26) einen Überströmkanal (12) bildet, der ein Überströmen von Fluid an dem Kolben (5) vorbei aus dem Arbeitsraum (11) in den Speicherraum erlaubt, wobei mittels der Antriebseinrichtung (18) das Druckrohr (4) und die Überwurfhülse (27) relativ zueinander verdrehbar sind, und wobei sich in dem Druckrohr (4) eine Mehrzahl von in der axialen Richtung verlaufenden Reihen mit der mindestens einen Drosselöffnung (17) befindet, die mittels der Antriebseinrichtung in Überdeckung mit dem Schlitz (26) in der Überwurfhülse (27) bringbar sind.

2. Stoßdämpfer nach Anspruch 1, ***dadurch gekennzeichnet, dass*** die Antriebseinrichtung (18) an dem Gehäuserohr (2'), vorzugsweise an einer Stirnseite (7) des Gehäuserohres (2') befestigt ist, wobei die Antriebseinrichtung (18) weiter vorzugsweise auf der der Kolbenstange (6) gegenüber liegenden Seite des Gehäuserohres (2') angeordnet ist und weiter vorzugsweise eine Längsachse des Stoßdämpfers (1') oder des Gehäuserohres (2,2') mit einer Mittelachse der Antriebseinrichtung (18) fluchtet.

3. Stoßdämpfer nach einem der vorgenannten Ansprüche, ***dadurch gekennzeichnet, dass*** die Antriebseinrichtung (18) eine Drehbewegung erzeugt, die mittels zweier gewindeartig zusammenwirkender Bauteile in eine Bewegung in axiale Richtung des Druckrohres umsetzbar ist, wobei die Antriebseinrichtung (18) vorzugsweise einen elektrischen, weiter vorzugsweise elektromotorischen, oder pneumatischen oder hydraulischen Antrieb besitzt.

4. Stoßdämpfer nach einem der vorgenannten Ansprüche, ***dadurch gekennzeichnet, dass*** die Antriebseinrichtung (18) auf der Stirnseite des Gehäuserohres (2') angeordnet ist, an der die Kolbenstange (6) aus dem Gehäuserohr (2') austritt, wobei ein hülsenförmiges Übertragungselement der Antriebseinrichtung die Stirnseite des Gehäuserohres (2') abgedichtet durchdringt.

5. Stoßdämpfer nach einem der vorgenannten Ansprüche, ***gekennzeichnet durch*** mindestens eine Messeinrichtung, mittels derer eine Betriebstemperatur des Fluids und/oder ein Druck des Fluids in dem Arbeitsraum (11) messbar, und mindestens eine Steuereinrichtung (47), mittels derer die Antriebseinrichtung (18) abhängig von der Betriebstemperatur und/oder dem Druck in dem Arbeitsraum (11) steuerbar ist, wobei diese vorzugsweise programmgesteuert ist.

6. Stoßdämpfer nach Anspruch 5, ***dadurch gekennzeichnet, dass*** die Messeinrichtung mindestens ein Thermoelement (45) und/oder einen piezo-elektrischen Drucksensor (50) aufweist.

7. Stoßdämpfer nach Anspruch 5 oder 6, ***dadurch gekennzeichnet, dass*** die Steuereinrichtung und die Antriebseinrichtung in einer baulichen Einheit integriert sind, wobei die Antriebseinrichtung vorzugsweise in einem Gehäuse des Stoßdämpfers integriert ist.

8. Verfahren zum Einstellen eines Stoßdämpfers (1') nach einem der vorgenannten Ansprüche, ***dadurch gekennzeichnet, dass*** eine Betriebstemperatur und/oder ein Druck des Fluids in dem Arbeitsraum (11) und eine Änderung der Betriebstemperatur und/oder des während eines Dämpfungszyklus auftretenden Maximaldrucks gemessen und der Drosselquerschnitt (36) abhängig von der Änderung angepasst wird, wobei der Drosselquerschnitt (36) automatisch eingestellt wird.

## Claims

1. Shock absorber (1') with a housing tube (2'), a pressure tube (4) arranged coaxially therein and a piston (5) which, radially sealed in the axial direction, is displaceable in the pressure tube (4), wherein a piston rod (6) of the piston (5) is fed out a sealed manner through an end face of the housing tube (2') and the piston (5) together with at least the pressure tube (4) delimits an operating space (11) from which a fluid, as a result of a movement of the piston (5) in the axial direction, can be displaced by the effect of throttling through a throttle opening (17) defining a throttle cross-section into a storage room, wherein the effective throttle cross-section can be varied by means of a remotely controllable actuating device (18), **characterised in that** the pressure tube (4) is borne in a retainer sleeve (27), provided with a slit (26) extending in the axial direction and arranged coaxially to the pressure tube (4), which is arranged coaxially in the housing tube (2), wherein the slit (26) forms a transfer channel (12) which allow the transfer of fluid from the operating space (11) past the piston (5) into the storage space, wherein by means of the actuating device (18) the pressure tube (4) and the retainer sleeve (27) can be turned relative to each other, and wherein in the pressure tube (4) there is a plurality of rows running in the axial direction with at least one throttle opening (17) which by means of the actuating device can be brought into a position overlapping the slit (26) in the retainer sleeve (27).

2. Shock absorber according to claim 1 **characterised in that** the actuating device (18) is attached to the housing tube (2'), preferably to an end face (7) of the housing tube (2'), wherein the actuating device (18) is also preferably arranged on the side of the housing tube (2') lying opposite the piston rod (6) and also preferably a longitudinal axis of the shock absorber (1') or of the housing tube (2, 2') is flush with a middle axis of the actuating device (18).

3. Shock absorber according to any one of the preceding claims **characterised in that** the actuating device (18) brings about a rotational movement which by way of two components working together in a thread-like manner is convertible into a movement in the axial direction of the pressure tube, wherein the actuating device (18) preferably has an electrical, more preferably an electromotor, or pneumatic or hydraulic actuator.

4. Shock absorber according to any one of the preceding claims **characterised in that** the actuating device (18) is arranged on the end face of the housing tube (2'), at which the piston rod (6) emerges out of the housing tube (2'), wherein a sleeve-like transmission element of the actuating device penetrates the end face of the housing tube (2') in a sealed manner.

5. Shock absorber according to any one of the preceding claims **characterised by** at least one measuring device, by means of which an operating temperature of the fluid and/or a pressure of the fluid in the operating space (11) can be measured, and at least one control device (47) by means of which the actuating device (18) can be controlled as a function of the operating temperature and/or pressure in the operating space (11), wherein this is preferably program-controlled.

6. Shock absorber according to claim 5 **characterised in that** the measuring device comprises at least one thermo-element (45) and/or a piezo-electric pressure sensor (50).

7. Shock absorber according to claim 5 or 6 **characterised in that** the control device and the actuating device are integrated into one structural unit, wherein the actuating device is preferably integrated into a housing of the shock absorber.

8. Method of adjusting a shock absorber (1') according to any one of the preceding claims **characterised in that** an operating temperature and/or a pressure of the fluid in the operating space (11) and a change in the operating temperature and/or the maximum pressure occurring an absorbing cycle is/are measured and the throttle cross-section (36) is adjusted as a function of the change, wherein the throttle cross-section (36) is automatically adjusted.

## Revendications

1. Amortisseur de chocs (1') comprenant un tube de logement (2'), un tube de pression (4) agencé coaxialement dedans et un piston (5) qui peut se déplacer dans le tube de pression (4) dans le sens axial en étant étanchéifié radialement, dans lequel une tige de piston (6) du piston (5) est sortie en étant étanchéifiée par une face avant du tube de logement (2') et le piston (5) délimite conjointement avec au moins le tube de pression (4) un espace de travail (11) hors duquel un fluide peut être poussé dans un espace de stockage à la suite d'un mouvement du piston (5), dans le sens axial, à travers au moins une ouverture d'étranglement (17) définissant une section transversale d'étranglement par effet d'étranglement, dans lequel la section transversale d'étranglement active est modifiable au moyen d'un dispositif d'entraînement (18) pouvant être commandé à distance, **caractérisé en ce que** le tube de pression (4) est disposé dans un manchon de recouvrement (27) disposé coaxialement au tube de pression (4) et doté d'une fente (26) passant dans le sens axial, qui est disposé coaxialement dans le tube de logement (2), dans lequel la fente (26) forme un canal de débordement (12) qui permet un débordement de fluide passant devant le piston (5) en sortant de l'espace de travail (11) jusque dans l'espace de stockage, dans lequel au moyen du dispositif d'entraînement (18), le tube de pression (4) et le manchon de recouvrement (27) peuvent tourner l'un par rapport à l'autre, et dans lequel une pluralité de rangées avec l'au moins une ouverture d'étranglement (17) passant dans le sens radial se trouvent dans le tube de pression (4), lesquelles peuvent être amenées en recouvrement avec la fente (26) dans le manchon de recouvrement (27) au moyen du dispositif d'entraînement.

2. Amortisseur de chocs selon la revendication 1, **caractérisé en ce que** le dispositif d'entraînement (18) est fixé au tube de logement (2'), de préférence sur une face avant (7) du tube de logement (2'), dans lequel le dispositif d'entraînement (18) est plus encore de préférence disposé sur le côté du tube de logement (2') faisant face à la tige de piston (6) et plus encore de préférence, un axe longitudinal de l'amortisseur (1') ou du tube de logement (2, 2') affleure avec un axe médian du dispositif d'entraînement (18).

3. Amortisseur de chocs selon l'une des revendications précédentes, **caractérisé en ce que** le dispositif d'entraînement (18) produit un mouvement de rotation qui peut être converti en un mouvement dans le sens axial du tube de pression au moyen de deux pièces coopérant à la manière d'un filetage, dans lequel le dispositif d'entraînement (18) possède de préférence un entraînement électrique, plus encore de préférence par moteur électrique ou pneumatique ou hydraulique.

4. Amortisseur de chocs selon l'une des revendications précédentes, **caractérisé en ce que** le dispositif d'entraînement (18) est disposé sur la face avant du tube de logement (2'), sur lequel la tige de piston (6) sort du tube de logement (2'), dans lequel un élément de transfert en forme de manchon du dispositif d'entraînement pénètre la face avant du tube de logement (2') en étant étanchéifié.

5. Amortisseur de chocs selon l'une des revendications précédentes, **caractérisé par** au moins un dispositif de mesure au moyen duquel une température de fonctionnement du fluide et/ou une pression du fluide dans l'espace de travail (11) peu(ven)t être mesurée(s), et au moins un dispositif de commande (47) au moyen duquel le dispositif d'entraînement (18) peut être commandé en fonction de la température de fonctionnement et/ou de la pression dans l'espace de travail (11), dans lequel celui-ci est commandé par programme de préférence.

6. Amortisseur de chocs selon la revendication 5, **caractérisé en ce que** le dispositif de mesure présente au moins un élément thermique (45) et/ou un capteur de pression piézo-électrique (50).

7. Amortisseur de chocs selon la revendication 5 ou 6, **caractérisé en ce que** le dispositif de commande et le dispositif d'entraînement sont intégrés dans une unité de construction, dans lequel le dispositif d'entraînement est intégré de préférence dans un carter de l'amortisseur de chocs.

8. Procédé de réglage d'un amortisseur de chocs (1') selon l'une des revendications précédentes, **caractérisé en ce qu'**une température de fonctionnement et/ou une pression du fluide dans l'espace de travail (11) et une modification de la température de fonctionnement et/ou de la pression maximale se produisant pendant un cycle d'amortissement est/sont mesurée(s) et la section transversale d'étranglement (36) est adaptée en fonction de la modification, dans lequel la section transversale d'étranglement (36) est réglée automatiquement.
